Europäisches Patentamt

European Patent Office

Office européen des brevets

(11) Publication number: **0 065 850**
**B1**

(12) **EUROPEAN PATENT SPECIFICATION**

(45) Date of publication of patent specification: **30.10.85**

(21) Application number: **82302421.1**

(22) Date of filing: **12.05.82**

(51) Int. Cl.⁴: **C 10 B 33/02,** F 27 D 3/08,
C 10 B 53/00

(54) Apparatus for discharging a thermal decomposition residue containing carbon residue and balls of steel wire.

(30) Priority: **12.05.81 JP 71971/81**

(43) Date of publication of application:
**01.12.82 Bulletin 82/48**

(45) Publication of the grant of the patent:
**30.10.85 Bulletin 85/44**

(84) Designated Contracting States:
**CH DE FR GB LI**

(56) References cited:
**GB-A- 116 873**
**US-A-3 794 565**

(73) Proprietor: **KABUSHIKI KAISHA KOBE SEIKO SHO**
**3-18 1-chome, Wakinohama-cho Chuo-ku**
**Kobe 651 (JP)**

(73) Proprietor: **MECHANICAL SOCIAL SYSTEMS FOUNDATION**
**1-4-28, Mita Minato-ku**
**Tokyo (JP)**

(72) Inventor: **Kawakami, Shigezo**
**7-4 Shirogayama 1-chome**
**Tarumi-ku Kobe-shi (JP)**
Inventor: **Tsuji, Kunihiko**
**240-144, 2-chome Shioya-kitamachi**
**Tarumi-ku Kobe-shi (JP)**
Inventor: **Shimojima, Katsuhiko**
**9-3, Tsurukabuto 3-chome**
**Nada-ku Kobe-shi (JP)**
Inventor: **Fukuda, Mitsuru**
**3-4-1, Izumidai**
**Kita-ku Kobe-shi (JP)**
Inventor: **Kawaguchi, Hiroshi**
**2-3-1, Obanoyama-cho Shino-hara**
**Nada-ku Kobe-shi (JP)**

(74) Representative: **Wright, Hugh Ronald et al**
**Brookes & Martin 52/54 High Holborn**
**London WC1V 6SE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an apparatus for discharging solid residues of a thermal decomposition, and preferably to apparatus for classifying (i.e. separating) and cooling the thermal decomposition residues after separation of gaseous and solid products resulting from the pyrolytic treatment of city and industrial refuses or from dry distillation or pyrolysis or other chemical processes.

The method which has heretofore been used most widely in cooling and discharging the residue of a thermal decomposition process is to remove the residue from the apparatus by a chain conveyor or similar means after the residue has been dropped directly into water or after the residue has been sprayed with water. Such a discharge method requires the waste water to be treated and, where it is intended to utilize the residue which is recovered the quality of the residue is deteriorated by absorption of moisture and it then needs to be dried again. Therefore, where the residue is to be recycled, for example, where carbon is to be recovered after the thermal decomposition of waste tyres, it is necessary to cool and discharge the residue in a dry condition. In addition, there is the problem of sealing off the high temperature combustible gas atmosphere in the thermal decomposition apparatus from the ambient air when the residue is to be separated. Also there must be provided means to ensure smooth discharge of the residue even when it has adhesive properties or when it is irregular in shape and size and contains foreign matter.

It has been known to use a double shaft screw conveyor for a rotary kiln, cooling the residue while it is conveyed and discharged by the screw conveyor which comprises a pair of intermeshed tandem screws which are provided with axial passages through which cooling water is circulated. The screws in the tandem screw type discharge conveyor are mounted parallel to each other and supported at their opposite ends, so that the discharging operation is often interrupted by problems at the discharging ends of the screws.

Especially when handling residues resulting from the thermal decomposition of waste tyres, the steel cords and steel beads from the tyres gather into masses or balls of wire within the rotary kiln and often cause malfunctioning or damage to the screws by getting in between the two screws or entwining around them at their discharging ends. In some cases, the steel balls within the rotary kiln are connected together in the form of long chains which cause troubles in the discharge apparatus components such as the dumper.

According to the present invention, there is provided apparatus for discharging the thermal decomposition residue containing carbon residue and steel wire balls from a thermal decomposition apparatus, said discharge apparatus comprising a double shaft screw conveyor means including a double shaft screw conveyor in which the screws are supported at one end thereof, said double shaft screw conveyor means, in use, being located contiguously to a residue outlet of the thermal decomposition apparatus, and including a housing for hermetic connection to said residue outlet of said thermal decomposition apparatus, said housing enclosing said double shaft screw conveyor with sufficient space on the upper side thereof for allowing steel wire balls to pass along the screw conveyor, a first outlet provided in a bottom part of said housing for discharging the carbon residue conveyed by the lower portion of said double shaft conveyor, a second outlet provided at the free discharge end of said double screw conveyor means for discharging any steel wire balls transferred by the upper portion of said double screw conveyor, a seal means provided in said first outlet for shielding the interior of said housing from the ambient atmosphere, and water sealing means including a water bath, a chute connected to said second outlet at its upper end and opening into said water bath at its lower end, and a conveyor for conveying steel wire balls dropped into said water chute to a position outside said water bath.

The above and other features and advantages of the present invention will become apparent from the following description and claims, and for the accompanying drawings which show by way of example preferred embodiments of the present invention.

In the accompanying drawings:

FIGURE 1 is a schematic vertical section of an embodiment of the present invention;

FIGURE 2 is a view similar to FIGURE 1 but showing a more preferred embodiment of the invention;

FIGURE 3 is a section taken on line II—II of FIGURE 2;

FIGURE 4 is a schematic side view of a dumper of the apparatus of FIGURES 1 or 2;

FIGURE 5 is a schematic section of a water sealing apparatus of the apparatus of FIGURES 1 or 2;

FIGURE 6 is an enlarged sectional view of a chute of the water sealing apparatus;

FIGURE 7 is a schematic plan view of the chute of FIGURE 6; and

FIGURE 8 is a sectional view taken on line VII—VII of FIGURE 7.

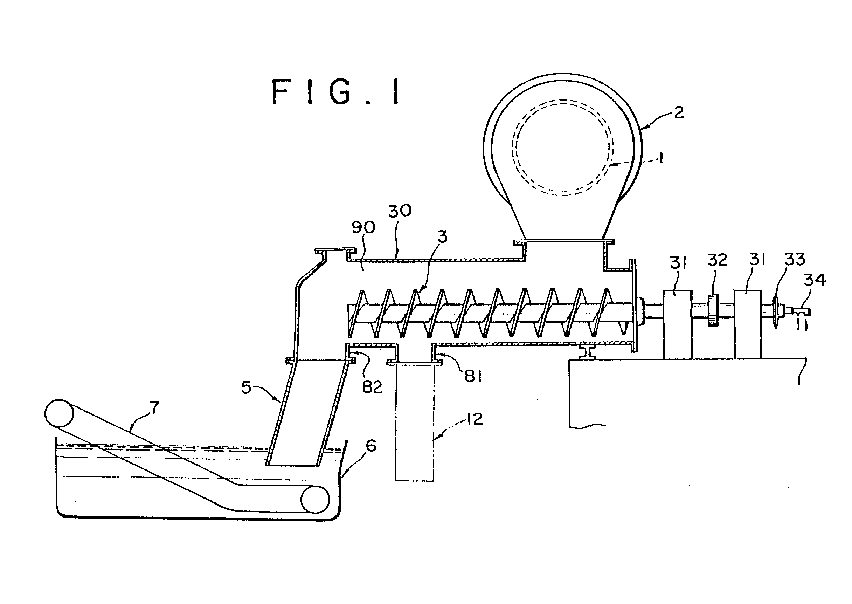

Referring to the accompanying drawings and referring first to FIGURE 1, there is shown a discharge apparatus for a rotary kiln 1, which kiln 1 is used for the thermal decomposition of waste material or the like, with a hood 2 around the residue discharging end thereof. The discharge apparatus includes a housing 30 which is connected to the hood 2 and defines a hermetically sealed space 90 above a double shaft screw conveyer 3 which conveyor 3 is rotatably supported in the housing 30. The screw conveyor 3 consists of a pair of intermeshed screws which are arranged perpendicular to the plane of FIGURE 1 and arranged parallel with each other and rotatably supported at one end in bearings 31, respectively. Intermeshed screw drive gears 32 are provided to which rotational force is transmitted from a drive source, not shown, through a sprocket 33. A cooling medium feed pipe 34 is connected to axial fluid passages (not shown) in the screw conveyor 3 wherein a cooling medium such as water is fed through the feed pipe 34 to the axial fluid passages in the screw conveyor 3 to cool the residue being conveyed by the screw conveyor 3.

The housing 30 is provided with a first outlet 81 for discharging carbon particles which are conveyed by the lower portion of the screw conveyor 3, and a second outlet 82 for discharging steel wire balls conveyed by the upper portion of the conveyor 3.

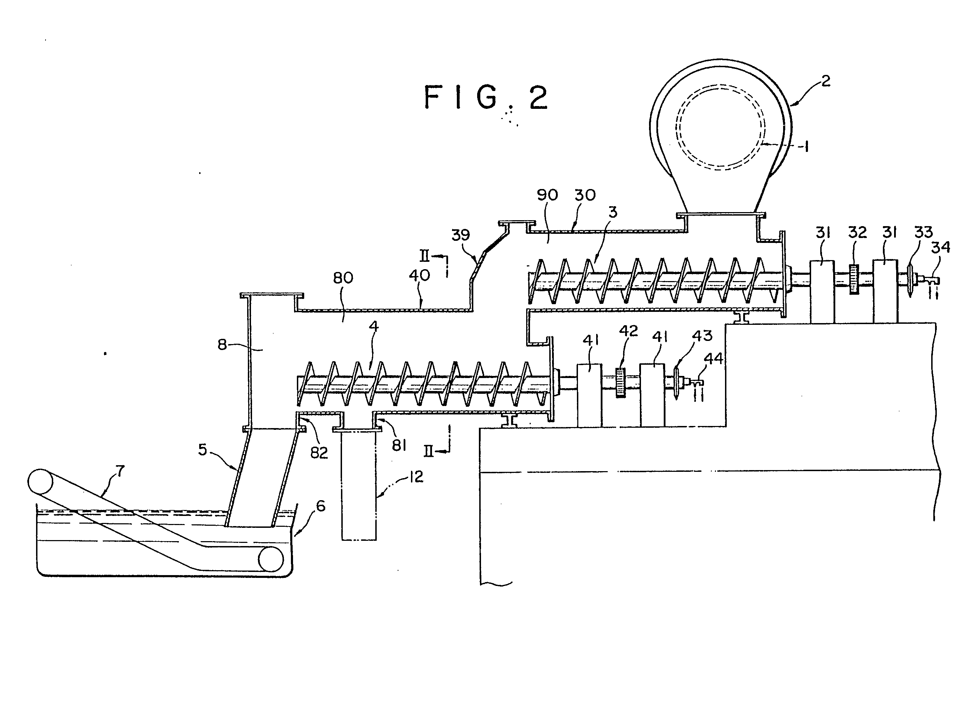

In the embodiments shown in FIGURE 2, the discharge apparatus is further provided with a second double shaft screw conveyor 4 extending downstream from below the discharge end of the first double shaft screw conveyor 3 and enclosed in a housing 39 which is hermetically connected with the housing 30. Similarly to the first screw assembly 3, the second screw conveyor 4 consists of a pair of intermeshed parallel screws which are supported at one end in bearings 41, respectively, and rotated in synchronism with each other by a drive mechanism including gears 42 and a sprocket 43. The screws receive a cooling medium in respective of axial fluid passages from a cooling medium feed pipe 44.

The housing 40 provides a space 80 above the second screw conveyor 4 in communication with the space 90 above the first screw assembly 3 and the interior of the rotary kiln 1. The space 80 is also in communication with a space 8 of a discharging section which is provided at the downstream end of the second screw conveyor 4, forming a second outlet 82 in its lower portion. The upper end of a chute 5 is connected to the second outlet 82 and its lower end is submerged in a water bath to a depth corresponding to the internal pressure of the kiln. A conveyor 7 is provided for conveying the discharged material dropped through the chute 5 out of the water bath 6.

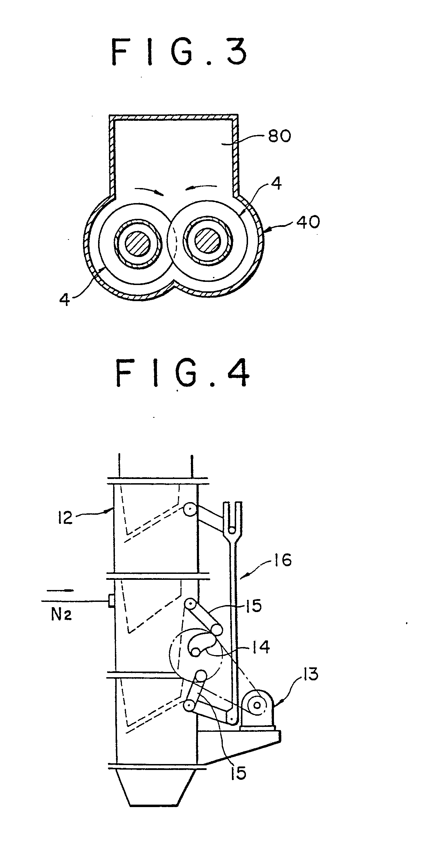

The first outlet 81 which is provided beneath a longitudinally middle point of the second screw 4 is provided with a multiple dumper 12. As shown particularly in FIGURE 4, the multiple dumper 12 is, in fact, a triple dumper and is arranged such that second and third dumper plates are opened successively by a cam mechanism including arms 15. The arms 15 are connected to the rotational shafts of the respective dumper plates and associated with a cam 14 which is rotatably driven from a motor 13, to close a dumper plate by a weight before the other dumper plate is opened. The first dumper plate is connected to the third dumper plate through a rod 16 and therefore it is opened and closed in synchronism with the third dumper plate. The rod 16 is provided with a fork-like bifurcated portion in which the arm of the first dumper plate rests, so that the third dumper plate can be opened and closed independently even if the first dumper plate is shut up with waste material, so that it does not function normally. In this sort of dumper, there is a possibility of each of the dumping chambers leaking to allow ambient air into the housing 40 so that it is preferred to supply an inert gas immediately upstream of the dumper plate of the second chamber as shown in FIGURE 4, thereby reducing the leakage of combustible gases to the minimum amount possible. The supply of inert gas is preferred since generally a certain degree of gas leakage is unavoidable in the dumper and rotary valve.

As is clear from FIGURE 3, in the above-described discharge apparatus, the intermeshed screws 3 and 4 of the first and second screw conveyors are rotated toward each other. Of the residues discharged from the rotary kiln 1, that part which is small in size and shape pass between the blades or shafts of the respective screws 3 or are engaged by the lower part of the screw blades of the screws 3 and conveyed toward the second screw conveyor 4. On the other hand, that part of the residue which is of relatively large size such as any balls of steel wire are conveyed by the upper portion of the screws 3 toward the second conveyor 4.

The second screw conveyor 4 conveys the residues toward its discharge end in the same manner as the first screw conveyor 3. Therefore, the spaces 80 and 90 above the first and second screw conveyors 3 and 4 must be sufficiently large to permit the passage of large blocks (i.e. the balls of steel wire) conveyed by the respective screws. The discharge ends of the first and second double shaft screw conveyors are left free so that the conveyed balls of steel wire are dropped smoothly therefrom without entangling or getting stuck with the discharge end of the conveyor. The blocks (e.g. balls of steel wire) of residue which are conveyed by the upper portion of the screws 3 usually carry occluded and deposited carbon particles. The carbon particles are shaken off as the blocks are dropped and tumbled on the second screw conveyor 4. The relatively small blocks which are chewed in the first screw conveyor 3, undergo a change in shape and size so that there is less possibility of them being seized in the blades of the screws 4.

The particulate portion of the residue such as carbon particles pass to the second screw conveyor 4 and fall down between the rotating screw blades and are discharged through the first outlet 81 and ejected through the multiple dumper.

The blocks of the residue including balls of steel wire which are conveyed by the upper portion of the screw conveyor are dropped into the chute 5, through the space 8 which is provided downstream of the free end of the screw assembly 4, and conveyed out of the water bath 6 by the submerged conveyer 7. If a multiple dumper or other mechanical seal were to be used for the discharge of the steel balls, seizure of the steel balls in the dumping flag sections would occur. The large blocks of the residue including the steel wire balls are smoothly passed forward through the free ends of the first and second screw conveyors. The first and second screw conveyors which are provided in vertically staggered positions accelerate the separation of carbon particles from the steel wire balls, performing the separating, cooling and discharging operations smoothly in an efficient manner.

Although the screws of the first and second screw conveyors 3 and 4 would have a narrow pitch in order to prevent entanglement of the steel wire balls, the two screw conveyors may have different pitches, eg. a wide pitch for the first screw conveyor 3 and a narrow pitch for the second screw conveyor 4 for facilitating the above-mentioned effects. In such a case, however, the second screw conveyor has a narrower pitch since the carbon particles and steel wire balls are separated by the second screw conveyor.

According to the nature and volume of the residue, more than two double shaft screw conveyors may be provided in series in the same manner as described with respect to the two screw conveyors.

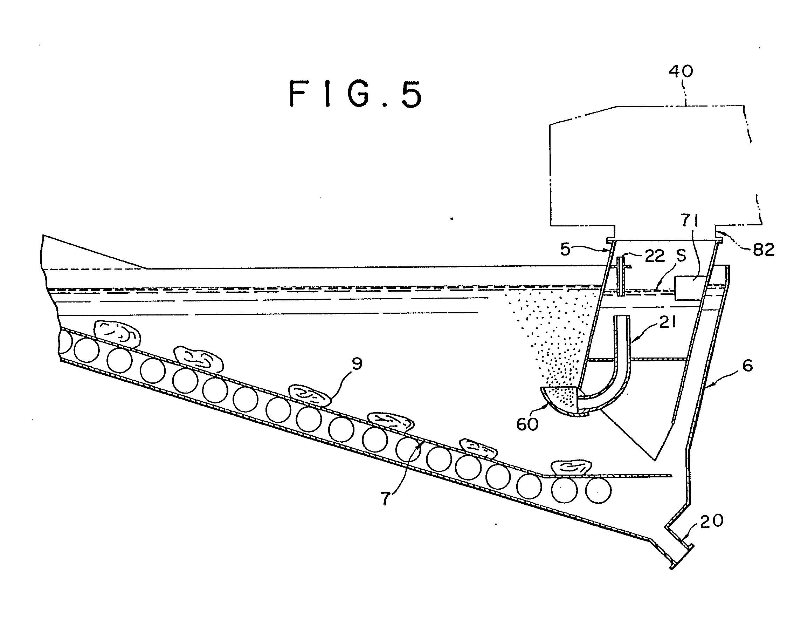

FIGURE 5 illustrates in greater detail the construction of the water-seal of the discharge apparatus. It includes a water bath 6, a chute 5 hermetically connected to the second outlet at the discharge end of the screw conveyor to receive steel wire balls therefrom, and a submerged conveyor 7 such as a magnetic roller conveyor for conveying the discharging steel wire balls out of the water bath.

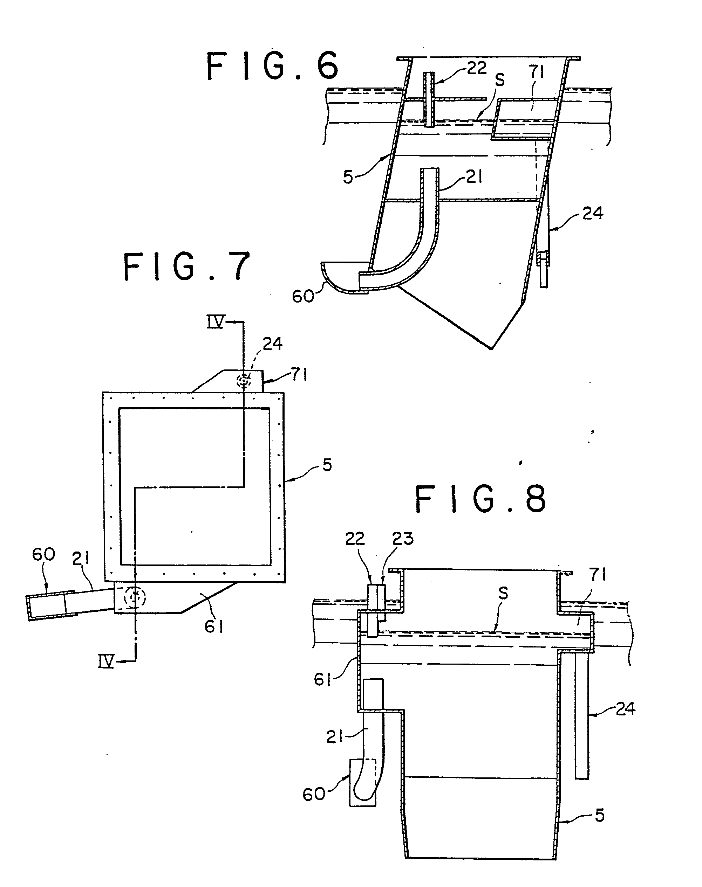

Remaining particles of deposited carbon on the steel wire balls 9 are shaken off as the balls are dropped through the chute 5, and float on the water surfaces S within the chute 5. To remove the floating carbon particles, the chute 5 is provided with a floating particle removing means. More specifically, as shown in FIGURES 6, 7, the chute 5 is provided with laterally projecting pockets 61 and 71 in opposite side walls provided with floating particle collecting and discharging means. The floating particle collecting means comprises a discharge pipe 21, and main and auxiliary straight downwardly directed jet nozzles 22 and 23. The discharge pipe 21 which has its open upper end within the chute 5 is fixed to the lower portion of the pocket 61, and the other, lower, end opens upwardly at a position outside the chute 5 through a terminal member 60. The main and auxiliary nozzles 22 and 23 which are fixed to the upper portion of the pocket 61 have their lower ends disposed beneath and above the water surface, respectively. Although not shown in the drawing, the main and auxiliary nozzles 22 and 23 are connected through pipes to an input nozzle 20 at the bottom of the water bath 6 the bottom nozzle 20 supplying water from the bath to create the jet at the nozzles 22 and 23.

On the other hand, the pocket 71 is provided with an upwardly directed jet nozzle 24 to eject water from the bottom nozzle 20 or else an inert gas such as nitrogen dioxide or the like.

In the above-described water seal apparatus, while the steel wire balls are dropped into the water bath through the chute 5 and transferred out of the water bath 6 by the operation of the magnetic roller conveyor 7, water from the bath 6 gushes out of the main and auxiliary downwardly directed nozzles 22 and 23. By the action of the jet, the surface layers of the water in the chute 5 is directed into the discharge pipe 21 and passes out of the chute 5 through the terminal member 60. Consequently, the carbon particles which are floating on the water surface layer S within the chute 5 are carried away from the chute 5 by the water jet passing into the discharge pipe 21.

The above described floating particle discharging operation would operate with the main downcast nozzle 22 alone.

However, if the lower end of the main nozzle 22 is located only just below the water surface S, there is a possibility of the gases in the heated atmosphere above the water surfaces SX being entrained and carried away through the discharge pipe 21 by the strong water jet, and, if the water jet is reduced, the discharging water flow becomes unstable with intermittent stagnation and reverse flows caused by the entrained gases.

The phenomena of intermittent stagnation and reverse flows of the discharging water due to the entrained gases can be eliminated by proper location of the lower end of the main nozzle 22, but the floating particles of the water surface S are discharged through the pipe 21 only in an insufficiently small amount. Thus, the floating particle discharge capacity is largely influenced by the surface level S of the water in the chute 5.

It follows that, in order to ensure stable operation, there should preferably be provided a main nozzle 22 which has its lower end located at a deep position beneath the water surface S and which is arranged to provide a water jet strong enough to stabilize the water flows through the discharge pipe 21, in combination with an auxiliary nozzle 23 which also provides a water jet to urge the floating carbon on the water surface S toward the discharge pipe 21.

The upwardly directed nozzle 24 produces an upswell which causes the floating carbon on the water surface S to gather in the vicinity of the other nozzles 22 and 23 thereby enhancing the efficiency of the floating particle discharging operation. The upswelling water produced by the jet of circulated water or inert gas from the upwardly directed nozzle 24 push the floating paticles on the water surface S of the pocket 71 toward the opposite side of the chute 5 and agitate the surface as a whole to facilitate the drifting of the solidified floating particles. If desired, the upwardly directed nozzle 24 may be replaced by a mechanical means such as a pusher operated by a piston cylinder or a sweeper using a ring belt, although the use of the upwardly directed nozzle is more advantageous from the standpoint of maintenance, cost and space.

The floating particle discharge and transfer means are mounted in pockets 61 and 71 to prevent the steel wire balls which are dropped from the double shaft screw conveyor 4 becoming entangled with the particle discharging means. The outlet end of the discharge pipe 21 may be led to a position outside the water bath 6 to release the collected floating particle material directly at that position, or may be floated on the surface of the water bath as shown in FIGURE 5 so that the floating particles are caught on the steel wire balls 9 as they come up to the water surface one after another on the magnetic roller conveyor 7.

As is clear from the foregoing description, the pyrolytic residue discharge apparatus described can effectively classify and discharge the residue whilst maintaining the kiln in a sealed state, and preventing entanglement of steel wire balls by a simple construction.

**Claims**

1. Apparatus for discharging the thermal decomposition residue containing carbon residue and steel wire balls from a thermal decomposition apparatus, said discharge apparatus comprising a double shaft screw conveyor means including a double shaft screw conveyor (3, 4) in which the screws are supported at one end thereof, said double shaft screw conveyor means, in use, being located contiguously to a residue outlet (81, 82) of the thermal decomposition apparatus, and including a housing (30; 40) for hermetic connection to said residue outlet of said thermal decomposition apparatus, said housing enclosing said double shaft screw conveyor with sufficient space (80; 90) on the upper side thereof for allowing steel wire balls to pass along the screw conveyor, a first outlet (81) provided in a bottom part of said housing for discharging the carbon residue conveyed by the lower portion of said double shaft conveyor, a second outlet (82) provided at the free discharge end of said double screw conveyor means for discharging any steel wire balls transferred by the upper portion of said double screw conveyor, a seal means provided in said first outlet for shielding the interior of said housing from the ambient atmosphere, and water sealing means including a water bath (6), a chute (5) connected to said second outlet at its upper end and opening into said water bath at its lower end, and conveyor (7) for conveying steel wire balls dropped into said water bath through said chute to a position outside said water bath.

2. Apparatus as claimed in Claim 1, wherein said double shaft screw conveyor means consists of at least two double shaft screw conveyors located generally end to end and successively below one another so that material transported by one double shaft screw conveyor is passed to a subsequent double shaft screw conveyor and said first and second outlets are provided at positions below and downstream of the discharging end portion of said second screw conveyor respectively.

3. Apparatus as claimed in Claim 1 or 2 wherein said seal means in said first outlet comprises a multiple dumper (12).

4. Apparatus as claimed in Claim 1, 2 or 3 wherein said water sealing means is provided with a discharge pipe (21) for floating particles fixed in a submerged position in said chute and leading to a position outside said chute, and a main downwardly directed jet nozzle (22), the open end of which is located in a submerged position opposite said discharge pipe.

5. Apparatus as claimed in Claim 4, wherein said water sealing means is further provided with an auxiliary non-submerged downwardly directed jet nozzle (23).

6. Apparatus as claimed in any of Claims 3 to 5, wherein said downwardly directed nozzle is adapted to produce a jet of water which is circulated from said water bath or an inert gas.

7. Apparatus as claimed in any of Claims 3 to 5, wherein the lower end of said discharge pipe is turned up and opens into said water bath through a terminal member (60).

8. Apparatus as claimed in any of Claims 1 to 7 wherein said conveyor of said water sealing means is a magnetic roller conveyor.

9. Apparatus as claimed in Claims 1 to 2, wherein said double shaft screw conveyor is provided with a cooling medium feed pipe and axial fluid passages in said screws.

**Patentansprüche**

1. Vorrichtung zur Austragung eines Kohlenstoffresiduum und Stahldrahtkugeln enthaltenden thermischen Zersetzungsrückstandes aus einer thermischen Zersetzungsvorrichtung, wobei diese Austragungsvorrichtung eine Doppelwellenschneckenfördereinrichtung mit einem Doppelschneckenförderer (3; 4) umfaßt, in welchem die Schnecken an dem einen Ende gelagert sind, wobei diese Doppelschneckenfördereinrichtung im Betrieb benachbart einem Residuumauslaß (81; 82) der thermischen Zersetzungsvorrichtung angeordnet ist und ein Gehäuse (30; 40) für die hermetische Verbindung mit dem Residuumauslaß der thermischen Zersetzungsvorrichtung umfaßt, wobei das Gehäuse einen Doppelwellenschneckenförderer mit ausreichendem Raum (80; 90) auf der Oberseite umfaßt, damit die Stahldrahtkugeln längs des Schneckenförderers passieren können, mit einem ersten Auslaß (81) in einem Bodenteil dieses Gehäuses zum Austrag des Kohlenstoffrückstandes, der durch den unteren Teil dieses Doppelwellenförderers gefördert wird, einem zweiten Auslaß (82) am freien Austragsende der Doppelschneckenfördereinrichtung zur Austragung sämtlicher Stahldrahtkugeln, die durch den oberen Teil des Doppelschneckenförderers transportiert werden, einer Dichtungseinrichtung in diesem ersten Auslaß zur Abschirmung des Inneren des Gehäuses gegen die umgebende Atmosphäre und Wasserabdichtungseinrichtungen mit einem Wasserbad (6), einem mit dem zweiten Auslaß am oberen Ende verbundenen Fallrohr (5), das in das Wasserbad am unteren Ende öffnet sowie einem Förderer (7), der die Stahldrahtkugeln, die in das Wasserbad durch das Fallrohr gefallen sind, an einen Ort außerhalb des Wasserbades fördert.

2. Vorrichtung nach Anspruch 1, dadurch gekennzeichnet, daß diese Doppelwellenschneckenfördereinrichtung aus wenigstens zwei Doppelwellenschneckenförderern besteht, die im wesentlichen stirnseitig gegeneinander und aufeinander folgend untereinander derart angeordnet sind, daß das durch einen Doppelwellenschneckenförderer transportierte Material an einen folgenden Doppelwellenschneckenförderer übergeben wird und diese ersten und zweiten Auslässe an Orten unterhalb und in Strömungsrichtung hinter dem Austragsendteil dieses zweiten Schneckenförderers jeweils angeordnet sind.

3. Vorrichtung nach Anspruch 1 oder 2, dadurch gekennzeichnet, daß diese Abdichtungseinrichtungen in diesem ersten Auslaß aus einem Mehrfachdumper (12) bestehen.

4. Vorrichtung nach Anspruch 1, 2 oder 3, dadurch gekennzeichnet, daß die Wasserabdichtungseinrichtung mit einem Austragsrohr (21) für flottierende Partikel versehen ist, das in einer getauchten Stellung in dem Fallrohr vorgesehen ist und zu einem Ort außerhalb des Fallrohrs führt und wobei eine nach unten gerichtete Hauptstrahldüse (22) vorgesehen ist, deren offenes Ende in getauchter Stellung gegenüber dem Austragsrohr angeordnet ist.

5. Vorrichtung nach Anspruch 4, dadurch gekennzeichnet, daß die Wasserabdichtungseinrichtung weiterhin mit einer nicht getauchten nach unten gerichteten Strahldüse (23) versehen ist.

6. Vorrichtung nach einem der Ansprüche 3 bis 5, dadurch gekennzeichnet, daß diese nach unten gerichtete Strahldüse so ausgebildet ist, daß sie einen Wasserstrahl, der von diesem Wasserbad in Zirkulation versetzt wird, oder ein Inertgas erzeugt.

7. Vorrichtung nach einem der Ansprüche 3 bis 5, dadurch gekennzeichnet, daß das untere Ende dieses Austragsrohres nach oben gerichtet ist und in dieses Wasserbad über ein Endelement (60) geöffnet ist.

8. Vorrichtung nach einem der Ansprüche 1 bis 7, dadurch gekennzeichnet, daß dieser Förderer der Wasserabdichtungseinrichtungen ein magnetischer Rollenförderer ist.

9. Vorrichtung nach einem der Ansprüche 1 bis 2, dadurch gekennzeichnet, daß dieser Doppelwellenschneckenförderer mit einem Kühlmediumzuführungsrohr und axialen Fluiddurchlässen in diesen Schnecken versehen ist.

**Revendications**

1. Dispositif pour décharger d'un appareil de décomposition thermique un résidu de décomposition thermique contenant un résidu carboné et des boules de fil d'acier, ce dispositif de déchargement comprenant un moyen transporteur à double vis comportant un transporteur à double vis (3; 4) dans lequel les vis sont supportées à l'une de leurs extrémités, ce moyen transporteur à double vis étant, en service, contigu à une sortie (81; 82) du résidu de l'appareil de décomposition thermique, et comportant un carter (30; 40) pour le relier hermétiquement à ladite sortie de résidu de l'appareil de décomposition thermique, ce carter contenant ledit transporteur à double vis, en laissant sur son côté supérieur un espace (80; 90) suffisant pour laisser les boules de fils d'acier passer le long du transporteur, une première sortie (81) prévue dans une partie inférieure dudit carter pour décharger le résidu carboné transporté par la partie inférieure dudit transporteur à double vis, une seconde sortie (82) prévue à l'extrémité de libre déchargement dudit transporteur à double vis pour décharger toutes boules de fil d'acier transmises par la partie supérieure du transporteur à double vis, un moyen d'étanchéité prévu dans ladite première sortie pour protéger l'intérieur du carter contre l'atmosphère ambiante, et des moyen d'étanchéité hydrauliques comportant un bain d'eau (6), une goulotte (5) reliée à ladite seconde sortie par son extrémité supérieure et débouchant dans ledit bain d'eau par son extrémité inférieure, et un transporteur (7) pour le transport de boules de fil d'acier tombées dans ledit bain d'eau à travers ladite goulotte jusqu'en un emplacement extérieur audit bain d'eau.

2. Dispositif selon la revendication 1, caractérisé en ce que ledit transporteur à double vis est composé d'au moins deux transporteurs à double vis situés dans l'ensemble bout à bout et se suivant l'un au-dessous de l'autre de façon que la matière transportée par un transporteur à double vis passe à un transporteur à double vis suivant et lesdites première et seconde sorties sont prévues au-dessous et en aval respectivement du tronçon extrême de déchargement dudit second transporteur à vis.

3. Dispositif selon la revendication 1 ou 2, caractérisé en ce que ledit moyen d'étanchéité prévu dans la première sortie est constitué par un déchargeur multiétages (12).

4. Dispositif selon la revendication 1, 2 ou 3, caractérisé en ce que lesdits moyens d'étanchéité hydrauliques sont munis d'un tuyau (21) de déchargement de particules flottantes fixé dans ladite goulotte en un emplacement immergé et menant à un emplacement extérieur à la goulotte, et d'une buse d'éjection principale dirigée vers le bas (22) dont l'extrémité ouverte est située dans un emplacement immergé en face dudit tuyau de déchargement.

5. Dispositif selon la revendication 4, caractérisé en ce que lesdits moyens d'étanchéité hydrauliques sont en outre munis d'une buse d'éjection auxiliaire non immergée dirigée vers le bas (23).

6. Dispositif selon l'une quelconque des revendications 3 à 5, caractérisé en ce que ladite buse dirigée vers le bas est destinée à émettre un jet d'eau mise en circulation à partir dudit bain d'eau ou un gaz inerte.

7. Dispositif selon l'une quelconque des revendications 3 à 5, caractérisé en ce que l'extrémité inférieure dudit tuyau de déchargement est tournée vers le haut et débouche dans ledit bain d'eau à travers un élément terminal (60).

8. Dispositif selon l'une quelconque des revendications 1 à 7, caractérisé en ce que ledit transporteur des moyens d'étanchéité hydrauliques est un transporteur à rouleaux magnétiques.

9. Dispositif selon les revendications 1 et 2, caractérisé en ce que ledit transporteur à double vis présente un tuyau d'amenée d'agent de refroidissement et des passages de fluide axiaux ménagés dans lesdites vis.

# FIG. I

# FIG. 2

0 065 850

# F I G . 3

# F I G . 4

# FIG.5

# FIG.6

# FIG.7

# FIG.8